# DEMANDE DE BREVET EUROPEEN

(11) **EP 2 445 127 A1**
(43) Date de publication de la demande: **25.04.2012**
(21) Numéro de dépôt: 10306154.5
(22) Date de dépôt: 22.10.2010
(51) Int. Cl.: H04J 3/06

(54) **Procédé non intrusif de synchronisation d'horloges maître et esclave d'un réseau à commutation de paquets, et dispositifs de synchronisation associés**

(71) Demandeur: Alcatel Lucent, 75007 Paris (FR)
(72) Inventeur: Le Pallec, Michel, 91620, NOZAY (FR); Bui, Dinh Thai, 91620, NOZAY (FR)
(74) Mandataire: Nicolle, Olivier

(57) **Abrégé**

Un procédé est dédié à la synchronisation d'horloges maître (HM) et esclave (HE) d'un réseau à commutation de paquets, propres à s'échanger des flux de paquets de synchronisation via des équipements intermédiaires (E1-E9) de ce réseau, reliés entre eux. Ce procédé comprend les étapes suivantes:
i) déterminer dans chaque équipement intermédiaire (E1-E9) des temps de transit instantanés de paquets appartenant à un premier groupe de paquets d'au moins un flux choisi de paquets de synchronisation, puis agir sur des paquets d'un second groupe de paquets de ce flux choisi de sorte que leur temps de transit instantanés dans chaque équipement intermédiaire (E1-E9) soit sensiblement égal à un temps de transit maximum correspondant, et
ii) filtrer les paquets du flux choisi au moins dans l'horloge esclave (HE) afin de la synchroniser sur l'horloge maître (HM) au moyen des paquets traités du second groupe de ce flux choisi.

## Description

### Domaine technique

L'invention concerne les réseaux à commutation de paquets, et plus précisément la synchronisation d'horloges maître et esclave appartenant à un réseau à commutation de paquets.

On entend ici par "réseau à commutation de paquets" (ou "Packet-Switched Network") un réseau de communication dans lequel les messages numériques sont transmis sous forme de paquets de données d'une adresse source vers une adresse destinataire par des opérations de commutation ou de routage. On notera que le medium de communication peut être filaire ou non filaire.

### Etat de l'art

La distribution d'une référence temporelle ou fréquentielle entre une horloge maître (ou "master" en anglais) et une horloge esclave (ou "slave" en anglais) est réalisée à travers les noeuds d'un réseau à commutation de paquets.

On entend ici par "noeud" tout type d'équipement (ou élément) de réseau représentant un point de commutation ou de routage (ou d'aiguillage). Il pourra donc s'agir, par exemple, d'un commutateur ou d'un routeur.

Par ailleurs, on entend ici par "horloge maître" un élément capable de transmettre des messages/paquets horodatés de synchronisation. Un tel élément peut être, par exemple, un serveur IEEE 1588V2. Une horloge maître peut être intégrée dans, ou co-localisée avec, un élément ou équipement de réseau (comme par exemple un commutateur ou un routeur).

De plus, on entend ici par "horloge esclave" un élément capable de recevoir et traiter des messages/paquets horodatés afin de piloter une horloge locale fournissant une référence de fréquence ou de temps. Un tel élément peut être, par exemple, intégré dans, ou co-localisé avec, une station de base (dans le cas d'un réseau non filaire).

Afin de permettre la synchronisation d'une horloge esclave sur une horloge maître, les horloges maître et esclave doivent s'échanger des messages de synchronisation via des noeuds intermédiaires du réseau à commutation de paquets. A titre d'exemple non limitatif, ces messages de synchronisation peuvent être des messages du protocole IEEE 1588V2 (ou PTPV2 pour "Precision Time Protocol release 2") dans les deux sens de communication, c'est-à-dire de l'horloge maître vers l'horloge esclave (messages de type "SYNC") et de l'horloge esclave vers l'horloge maître (messages de type "DELAY_REQ"). Ces messages de synchronisation contiennent des informations d'horodatage permettant une synchronisation temporelle de l'horloge esclave sur l'horloge maître, à partir de laquelle peut être dérivée une synchronisation fréquentielle (ou syntonisation). Il est rappelé que la fréquence peut être dérivée du temps mais que la réciproque n'est pas vérifiée.

### Résumé de l'invention

Comme le sait l'homme de l'art, la précision de la synchronisation temporelle d'une horloge esclave par rapport à une horloge maître dépend à la fois de l'asymétrie des délais de transmission des paquets des messages de synchronisation (ci-après appelés paquets de synchronisation) appartenant à un premier flux (de l'horloge maître vers l'horloge esclave) et à un second flux (de l'horloge esclave vers l'horloge maître), et de la gigue paquet (ou "packet jitter") de ces paquets de synchronisation. Il est rappelé que la gigue paquet dépend notamment de la variation du délai de transmission de ce paquet à travers les éléments du réseau (ou "network elements").

Malheureusement, le temps (ou délai) de transit d'un paquet à travers un élément de réseau dépend fortement du niveau de trafic, lequel n'est pas prédictible. Dès lors, une précision de synchronisation temporelle, de l'ordre de, ou inférieure à, la microseconde, requise notamment pour l'exploitation des réseaux mobiles (stations de base), devient difficile à contrôler du fait de cette dépendance.

Afin de s'affranchir de ces dépendances, le standard IEEE 1588V2 propose d'associer à chaque noeud intermédiaire une horloge transparente (ou "transparent clock") chargée de déterminer le temps de transit local des paquets de synchronisation de chaque message de synchronisation d'un premier ou second flux (par soustraction entre leur horaire de départ local et leur horaire d'arrivée local) et de cumuler ce temps de transit local déterminé à la valeur en cours d'un champ dit de correction (ou "correction field") du message de synchronisation considéré.

L'opération de cumul précitée implique l'écriture dans le champ de correction d'un paquet qui est en transit au travers d'un noeud de réseau. Cette action intrusive est une violation du principe d'isolation des couches réseaux et peut potentiellement conduire à des problèmes de sécurité et/ou d'intégrité de l'information transmise. En outre la mise à jour du champ de correction au niveau de chaque noeud, effectuée par une horloge transparente (ou "transparent clock") peut représenter une opération complexe dans le cas d'un empilement de couches protocolaires important supportant les paquets de synchronisation. A titre d'exemple, lorsque les paquets de synchronisation sont transportés par une technologie pseudo-filaire Ethernet (définie par la règle RFC 4448), la pile de couches protocolaires peut être de type IEEE1588V2 sur UDP sur IP sur Ethernet sur PW ("Pseudo-wire") sur MPLS ("MultiProtocol Label Switching") sur une couche de transport. Dès lors, un tel empilement pose le problème de la localisation du champ de correction dans le paquet mais aussi de sa mise à jour, l'opération nécessitant un nouveau calcul de valeur de champ(s) "cheksum" du paquet considéré.

Afin d'éviter la violation des couches protocolaires précitée, il a été proposé que chaque noeud intermédiaire transmette à l'horloge esclave, éventuellement via un équipement de gestion, le temps de transit de chaque message de synchronisation qu'il a reçu localement. Hélas, cette solution souffre d'un réel problème de mise à l'échelle.

L'invention a donc pour but de permettre la synchronisation d'horloges maître et esclave d'un réseau à commutation de paquets de façon non intrusive (évitant l'écriture du champ de correction), c'est-à-dire sans que les couches protocolaires ne soient violées.

Selon un premier aspect, l'invention propose un procédé, dédié à la synchronisation d'horloges maître et esclave d'un réseau à commutation de paquets, propres à s'échanger des flux de paquets de synchronisation via des équipements (ou noeuds) intermédiaires de ce réseau, reliés entre eux.

On notera que ce procédé repose sur la séparation des flux de synchronisation en deux groupes de paquets distincts. Les paquets du premier groupe d'un flux sont choisis de sorte que leurs temps (ou délais) de transit instantanés mesurés dans un équipement (ou noeud) intermédiaire soient comparables à (ou approchent) ceux des paquets du second groupe de ce même flux, de sorte qu'un alignement des temps de transit instantanés des paquets du second groupe sur un temps de transit maximum (ou temps de référence) soit possible.

Ce procédé comprend plus précisément les étapes suivantes:
i) déterminer dans chaque équipement intermédiaire des temps de transit instantanés de paquets appartenant à un premier groupe de paquets d'au moins un flux choisi de paquets de synchronisation, puis agir sur des paquets d'un second groupe de paquets de ce flux choisi de sorte que leur temps de transit instantané dans chaque équipement intermédiaire soit sensiblement égal à un temps de transit maximum correspondant, et
ii) filtrer les paquets du flux choisi au moins dans l'horloge esclave afin de synchroniser l'horloge esclave sur l'horloge maître au moyen des paquets traités du second groupe.

Le procédé peut comporter d'autres caractéristiques qui peuvent être prises séparément ou en combinaison, et notamment :
- on peut déterminer à l'étape (i), dans chaque équipement intermédiaire, le temps de transit maximum des paquets du second groupe du flux choisi à partir des temps de transit instantanés des paquets du premier groupe du flux choisi;
   ➢ on peut déterminer dans l'étape (i) dans chaque équipement intermédiaire un nombre Kij de paquets successifs du premier groupe du flux choisi, devant être utilisés pour déterminer un temps de transit instantané représentatif des temps de transit instantanés des paquets du second groupe et un nombre Nij de paquets du second groupe du flux choisi, devant être traités pour présenter le temps de transit maximum, en fonction d'une corrélation de temps de transit instantanés entre paquets des premier et second groupes du flux choisi;
- on peut prévoir une étape (iii) consistant à déterminer, pour chaque équipement intermédiaire et pour chaque flux choisi, un nombre affiné K'ij (optimal) de paquets successifs du premier groupe, un nombre affiné N'ij (optimal) de paquets du second groupe et un temps de transit maximum affiné de paquets, en analysant une corrélation des temps de transit instantanés entre paquets des premier et second groupes du flux choisi au niveau de l'équipement intermédiaire considéré, puis à utiliser ces nombres affinés (optimaux) K'ij et N'ij et chaque temps de transit maximum affiné de paquets, dans les équipements intermédiaires correspondants;
   ➢ on peut effectuer dans l'étape (i) chaque corrélation de temps de transit entre paquets de chaque flux choisi au niveau de chaque équipement intermédiaire;
   ➢ on peut déterminer dans l'étape (iii) une première fréquence d'émission d'un premier type de message de synchronisation dans un premier flux choisi allant de l'horloge maître vers l'horloge esclave, une seconde fréquence d'émission d'un second type de message de synchronisation dans un second flux choisi allant de l'horloge esclave vers l'horloge maître, et, pour chaque équipement intermédiaire, un nombre affiné K'ij de paquets successifs du premier groupe, un nombre affiné N'ij de paquets du second groupe et un temps de transit maximum affiné de paquets, en fonction des corrélations de temps de transit instantanés entre paquets des premier et second groupes, pour chacun des équipements intermédiaires et pour chacun des premier et second flux;
   ➢ on peut calculer dans l'étape (iii), pour chacun des premier et second flux choisis, un temps de transit cumulé correspondant pour l'ensemble des équipements intermédiaires, en sommant leurs temps de transit maximum de paquets respectifs, afin de transmettre à l'horloge maître et/ou à l'horloge esclave ces deux temps de transit cumulés pour qu'elle(s) puisse(nt) corriger une asymétrie des délais de transmission des paquets de synchronisation des premier et second flux;
- on peut également filtrer dans l'étape (ii) les paquets du flux choisi dans l'horloge maître afin de synchroniser l'horloge esclave sur l'horloge maître au moyen des paquets traités du second groupe de ce flux choisi;
- on peut déterminer dans l'étape (ii) dans l'une au moins des horloges maître et esclave les paquets de synchronisation qui présentent une variation de délai de transmission comprise dans un intervalle choisi.

Selon un deuxième aspect, l'invention propose un premier dispositif, dédié à la synchronisation d'horloges maître et esclave d'un réseau à commutation de paquets, propres à s'échanger des flux de paquets de synchronisation via des équipements intermédiaires de ce réseau, reliés entre eux. Ce premier dispositif est agencé pour déterminer pour l'un des équipements intermédiaires des temps de transit instantanés de paquets appartenant à un premier groupe de paquets d'au moins un flux choisi de paquets de synchronisation, puis pour agir sur des paquets d'un second groupe de paquets de ce flux choisi de sorte que leur temps de transit instantané dans l'équipement intermédiaire soit sensiblement égal à un temps de transit maximum correspondant.

Ce premier dispositif peut être également agencé pour déterminer dans son équipement intermédiaire le temps de transit maximum des paquets du second groupe du flux choisi à partir des temps de transit instantanés des paquets du premier groupe du flux choisi.

Par ailleurs, ce premier dispositif peut être également agencé pour déterminer pour son équipement intermédiaire un nombre Kij de paquets successifs du premier groupe du flux choisi, devant être utilisés pour déterminer un temps de transit instantané représentatif des temps de transit instantanés des paquets du second groupe, et un nombre Nij de paquets du second groupe du flux choisi, devant être traités, en fonction d'une corrélation de temps de transit instantané entre paquets des premier et second groupes du flux choisi. Dans ce cas, le premier dispositif peut être également agencé pour déterminer chaque corrélation de temps de transit instantané entre paquets des premier et second groupes de chaque flux choisi pour son équipement intermédiaire.

Selon un troisième aspect, l'invention propose un deuxième dispositif, dédié à la synchronisation d'une horloge esclave d'un réseau à commutation de paquets sur une horloge maître de ce même réseau, les horloges maître et esclave étant propres à s'échanger des flux de paquets de synchronisation via des équipements intermédiaires du réseau, reliés entre eux. Ce deuxième dispositif est agencé pour filtrer des paquets appartenant à un second groupe de paquets d'un flux choisi, reçus au moins par l'horloge esclave et ayant été traités par chaque équipement intermédiaire pour que leur temps de transit instantané dans chaque équipement intermédiaire soit sensiblement égal à un temps de transit maximum, afin de permettre une synchronisation de l'horloge esclave sur l'horloge maître au moyen de ces paquets du second groupe.

Ce deuxième dispositif peut être également agencé pour déterminer pour l'horloge esclave les paquets de synchronisation qui présentent une variation de délai de transmission comprise dans un intervalle choisi.

Selon un quatrième aspect, l'invention propose un troisième dispositif, dédié à la synchronisation d'horloges maître et esclave d'un réseau à commutation de paquets, propres à s'échanger des flux de paquets de synchronisation via des équipements (ou noeuds) intermédiaires de ce réseau, reliés entre eux. Ce troisième dispositif est agencé pour déterminer, pour chaque équipement intermédiaire et pour chaque flux choisi, un nombre affiné K'ij (optimal) de paquets successifs du premier groupe, un nombre affiné N'ij (optimal) de paquets du second groupe et un temps de transit maximum affiné de paquets, en analysant une corrélation des temps de transit instantanés entre paquets des premier et second groupes du flux choisi au niveau de l'équipement intermédiaire considéré, afin que ces nombres affinés (optimaux) K'ij et N'ij et chaque temps de transit maximum affiné de paquets soient utilisés dans les équipements intermédiaires correspondants.

Ce troisième dispositif peut être également agencé pour déterminer une première fréquence d'émission d'un premier type de message de synchronisation dans un premier flux choisi allant de l'horloge maître vers l'horloge esclave, une seconde fréquence d'émission d'un second type de message de synchronisation dans un second flux choisi allant de l'horloge esclave vers l'horloge maître, et, pour chaque équipement intermédiaire, un nombre affiné K'ij de paquets successifs du premier groupe, un nombre affiné N'ij de paquets du second groupe et un temps de transit maximum affiné de paquets, à partir de l'analyse des corrélations de temps de transit instantanés entre paquets du premier groupe du flux choisi, pour chacun des équipements intermédiaires et pour chacun des premier et second flux.

Ce troisième dispositif peut être également agencé pour calculer, pour chacun des premier et second flux choisis, un temps de transit cumulé correspondant pour l'ensemble des équipements intermédiaires, en sommant leurs temps de transit maximum de paquets respectifs, afin de transmettre à l'horloge maître et/ou à l'horloge esclave ces deux temps de transit cumulés pour qu'elle(s) puisse(nt) corriger une asymétrie des délais de transmission des paquets de synchronisation des premier et second flux.

Selon un cinquième aspect, l'invention propose un système de synchronisation d'horloges maître et esclave d'un réseau à commutation de paquets, propres à s'échanger des flux de paquets de synchronisation via des équipements intermédiaires de ce réseau, reliés entre eux. Ce système comprend des premiers dispositifs du type de celui présenté ci-avant et propres à être associés respectivement aux équipements intermédiaires, des deuxièmes dispositifs du type de celui présenté ci-avant et propres à être associés respectivement aux horloges maître et esclave, et un troisième dispositif du type de celui présenté ci-avant et propre à être couplé aux équipements intermédiaires, à l'horloge maître et à l'horloge esclave.

### Brève description des dessins

D'autres caractéristiques et avantages de l'invention apparaîtront à l'examen de la description détaillée ci-après, et des dessins annexés, sur lesquels:

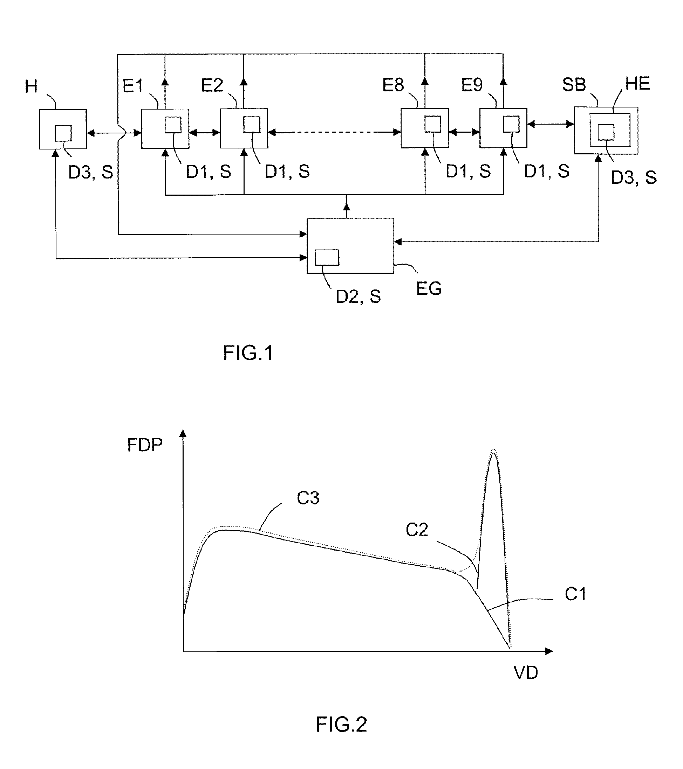

- la figure 1 illustre de façon très schématique et fonctionnelle des noeuds intermédiaires et des horloges maître et esclave d'un réseau à commutation de paquets connectés entre eux et dans lesquels sont implantés des dispositifs de synchronisation constituant un exemple de réalisation de système de synchronisation selon l'invention, et
- la figure 2 illustre, sous la forme d'un diagramme, un exemple d'évolution d'une Fonction de Densité de Probabilité (FDP), en échelle logarithmique, en fonction de la Variation du Délai de transmission de paquet (VD). La courbe C1 concerne les paquets des premiers groupes de paquets de synchronisation, la courbe C2 concerne les paquets des seconds groupes de paquets de synchronisation et la courbe C3 concerne la réunion des paquets des premiers et seconds groupes de paquets de synchronisation.

Les dessins annexés pourront non seulement servir à compléter l'invention, mais aussi contribuer à sa définition, le cas échéant.

### Description détaillée

L'invention a pour objet de permettre la synchronisation non intrusive d'une horloge esclave (HE) d'un réseau à commutation de paquets par rapport à une horloge maître (HM) de ce même réseau à commutation de paquets.

Dans ce qui suit, on considère, à titre d'exemple illustratif, que l'horloge esclave (HE) est intégrée dans une station de base (SB) d'un réseau de type LTE ("Long Term Evolution"). Mais, l'invention n'est pas limitée à ce type de scénario.

On notera que l'invention concerne n'importe quel type de réseau à commutation de paquets, filaire ou non filaire, et comprenant des équipements (ou noeuds) intermédiaires (Ei) dans lesquels les paquets entrants et sortants peuvent faire l'objet d'un marquage temporel (ou "time stamping") destiné à signaler leurs horaires d'arrivée et de départ par rapport à une horloge locale. On notera que l'invention est particulièrement bien adaptée, bien que non limitativement, aux réseaux LTE utilisant un encryptage de type IPSec pour lequel une intrusion à un stade de transmission intermédiaire est difficile.

Comme illustré non limitativement sur la figure 1, un réseau (à commutation de paquets) comprend une multiplicité d'équipements de communication (ou noeuds) Ei, HM et HE, reliés les uns aux autres afin de permettre la transmission de paquets, et notamment de paquets de synchronisation définissant des messages de synchronisation.

Plus précisément, un tel réseau comprend au moins une horloge maître HM, au moins deux équipements intermédiaires Ei (ici i = 1 à 9 à titre d'exemple purement illustratif), et au moins une horloge esclave HE (ici implantée dans une station de base SB). On notera que les équipements intermédiaires Ei sont des noeuds par lesquels transitent des flux de paquets qui sont issus de l'horloge maître HM et destinés à l'horloge esclave HE, ou inversement.

Dans ce qui suit, on considère, à titre d'exemple illustratif, que les messages de synchronisation sont conformes au standard IEEE 1588V2 (ou PTPV2). Par conséquent, les messages de synchronisation qui sont transmis de l'horloge maître HM vers l'horloge esclave HE peuvent être de type "SYNC", et les messages de synchronisation qui sont transmis de l'horloge esclave HE vers l'horloge maître HM peuvent être de type "DELAY_REQ".

Selon un aspect, l'invention propose de mettre en oeuvre un procédé de synchronisation des horloges maître HM et esclave HE d'un réseau du type de celui présenté ci-avant.

Ce procédé comprend au moins deux étapes principales (i) et (ii).

Une première étape principale (i), du procédé, consiste tout d'abord à déterminer dans chaque équipement intermédiaire Ei du réseau des temps de transit instantanés de paquets qui appartiennent à un premier groupe G1 de paquets d'au moins un flux choisi Fj de paquets de synchronisation.

Pour ce faire, on peut effectuer pour chaque paquet d'un premier groupe G1 la soustraction entre son horaire de départ par rapport à une horloge locale (défini par un marquage temporel de sortie) et son horaire d'arrivée par rapport à cette même horloge locale (défini par un marquage temporel d'arrivée).

La première étape principale (i), du procédé, se poursuit par une action sur des paquets, d'un second groupe de paquets G2 de chaque flux choisi Fj, destinée à rendre leur temps de transit instantané dans chaque équipement intermédiaire Ei, sensiblement égal à un temps de transit maximum Tij_{ref} correspondant. En d'autres termes la retransmission par un équipement intermédiaire Ei de chaque paquet de chaque second groupe G2 vers l'équipement suivant (Ei' (avec i' ≠i) ou HE ou encore HM) est retardée afin que son temps de transit dans cet équipement intermédiaire Ei soit sensiblement égal au temps de transit maximum Tij_{ref} correspondant. Pour ce faire, on peut par exemple utiliser des mémoires additionnelles.

On comprendra qu'un flux de synchronisation Fj est segmenté au niveau de chaque équipement intermédiaire Ei en une alternance de paquets d'un premier groupe G1 (utilisés pour déterminer un temps de transit maximum Tij_{ref}) et de paquets d'un second groupe G2 (traités afin que leur temps de transit instantané local soit sensiblement aligné sur ledit temps de transit maximum Tij_{ref}).

Il est important de noter que chaque temps de transit maximum Tij_{ref} peut être soit prédéfini et statique, soit prédéfini et affinable, soit encore déterminé par apprentissage au moins dans la première étape principale (i) et éventuellement affinable.

Dans cette dernière hypothèse, on peut déterminer, dans chaque équipement intermédiaire Ei, le temps de transit maximum Tij_{ref} des paquets du second groupe d'un flux choisi à partir des temps de transit instantanés des paquets du premier groupe de ce même flux choisi. De préférence, on détermine pour chaque équipement intermédiaire Ei du réseau, un premier temps de transit maximum Ti1_{ref} à partir des temps de transit instantanés dans l'équipement intermédiaire considéré Ei de paquets qui appartiennent à un premier groupe G1 de paquets d'un premier flux choisi F1 allant de l'horloge maître HM vers l'horloge esclave HE (par exemple dédié aux messages de type SYNC), et un second temps de transit maximum Ti2_{ref} à partir des temps de transit instantanés dans l'équipement intermédiaire considéré Ei de paquets qui appartiennent à un premier groupe G1 de paquets d'un second flux choisi F2 allant de l'horloge esclave HE vers l'horloge maître HM (par exemple dédié aux messages de type DELAY_REQ).

On notera que dans l'étape (i) il est avantageux de déterminer dans chaque équipement intermédiaire Ei, d'une part, un nombre Kij de paquets successifs d'un premier groupe G1 d'un flux choisi Fj qui doivent être utilisés pour déterminer un temps de transit instantané représentatif des temps de transit instantanés des paquets du second groupe G2 de ce flux choisi Fj afin de les aligner temporellement sensiblement sur le temps de transit maximum local Tij_{ref}, et, d'autre part, un nombre Nij de paquets d'un second groupe G2 de ce même flux choisi Fj qui doivent être traités (ou alignés) pour présenter le temps de transit maximum Tij_{ref}, en fonction d'une corrélation de temps de transit instantanés entre paquets des premier G1 et second G2 groupes de ce flux choisi Fj.

On entend ici par "corrélation de temps de transit instantanés entre paquets" une similitude étroite entre des temps de transit instantanés de paquets d'un premier groupe G1 d'un flux donné Fj et des temps de transit instantanés de paquets d'un second groupe G2 de ce même flux donné Fj. On comprendra que l'on considère ici que si des paquets successifs d'un premier groupe G1 d'un flux choisi Fj ont sensiblement le même temps de transit instantané local sur un premier intervalle temporel réduit, alors les paquets successifs d'un second groupe G2 de ce flux choisi Fj devraient avoir sensiblement le même temps de transit instantané local sur un second intervalle temporel réduit.

On notera que les nombres Kij et Nij doivent être supérieurs ou égaux à un (1). Ils sont choisis en fonction du taux d'émission des messages/paquets de synchronisation du flux considéré (ces messages étant transmis par l'horloge maître HM ou esclave HE), lequel taux peut être éventuellement déterminé (ou estimé) au niveau d'un équipement intermédiaire Ei pendant une phase d'apprentissage. Par ailleurs, le nombre Nij est de préférence choisi en fonction du comportement sur un intervalle de temps donné et de la variance des différents temps de transit instantanés des paquets d'un premier groupe G1 au niveau d'un équipement intermédiaire Ei. Le nombre Kij est en outre choisi préférentiellement petit par rapport au nombre Nij.

On notera également qu'il est actuellement préféré d'effectuer l'analyse de la corrélation de temps de transit entre paquets de chaque flux choisi Fj au niveau de chaque équipement intermédiaire Ei. Cela permet en effet de ne pas transmettre sur le réseau, vers une entité d'analyse centralisée, toutes les informations locales nécessaires à l'estimation de chaque corrélation de temps de transit entre paquets de chaque flux choisi Fj au niveau de chaque équipement intermédiaire Ei, ce qui occasionnerait une charge relativement importante.

On notera également que cette première étape principale (i) peut être mise en oeuvre au moyen de premiers dispositifs (de synchronisation) D1 qui sont associés respectivement aux équipements intermédiaires Ei.

On entend ici par "associé" aussi bien le fait de faire partie intégrante d'un équipement intermédiaire Ei (comme illustré), que le fait d'être couplé directement ou indirectement à un équipement intermédiaire Ei. Par conséquent, un premier dispositif (de synchronisation) D1 peut être réalisé sous la forme de modules logiciels (ou informatiques), ou bien de circuits électroniques, ou encore d'une combinaison de circuits électroniques et de modules logiciels.

Une deuxième étape principale (ii), du procédé, consiste à filtrer les paquets du flux choisi au moins au niveau de l'horloge esclave HE afin de synchroniser l'horloge esclave HE sur l'horloge maître HM au moyen des paquets du second groupe G2 qui ont été traités (alignés temporellement) pendant la première étape principale (i) par les premiers dispositifs D1 associés aux différents équipements intermédiaires Ei.

Afin d'améliorer la précision de la synchronisation et/ou d'accélérer la synchronisation, il peut être avantageux de filtrer également dans l'étape (ii) les paquets du (second) flux choisi F2 dans l'horloge maître HM.

Comme illustré schématiquement sur la figure 2, pour effectuer le filtrage on peut, par exemple, déterminer dans l'une au moins des horloges maître HM et esclave HE, et de préférence au moins dans cette dernière (HE), les paquets de synchronisation qui présentent une variation de délai de transmission comprise dans un intervalle temporel choisi.

En effet, comme le montre le diagramme de la figure 2, la fonction de densité de probabilité FDP (ou "Probability Density Function" (PDF) en anglais) de l'ensemble des paquets d'un flux choisi Fj (ici en échelle logarithmique et fonction de la variation du délai de transmission de paquet VD par rapport à une valeur minimale), matérialisée par la courbe en pointillés C3, résulte de la somme de deux contributions: celle des paquets non traités des premiers groupe G1 de ce flux choisi Fj, matérialisée par la courbe en tait continu C1 (très large et d'intensité maximale de valeur moyenne), et celle des paquets traités (alignés) des seconds groupe G2 de ce flux choisi Fj, matérialisée par la courbe en trait continu C2 (de très faible largeur et d'intensité maximale de valeur importante). Cela résulte du fait que l'alignement de la première étape principale (i) se fait sensiblement sur un temps de transit maximum Tij_{ref}. Typiquement, on peut obtenir une déviation standard des paquets des seconds groupes G2 (ou largeur de C2) beaucoup plus faible que celle des paquets du premier groupe G1 (largeur de C1), et typiquement inférieure 10 µs pour la largeur C2.

On comprendra qu'en présence d'un tel comportement des paquets d'un flux choisi Fj, le filtrage des paquets des seconds groupes G2 est relativement facile. Il suffit en effet de sélectionner les paquets dont les temps de transit respectifs sont compris dans un intervalle choisi calé sur la valeur de variation du délai de transmission maximale de paquet VD (par rapport à une valeur minimale). L'information d'horodatage portée par les paquets filtrés peut alors alimenter des boucles à verrouillage de phase (ou PLL pour "Phase Lock Loop") qui permettent de converger rapidement vers la fréquence de l'horloge maître HM, et donc d'en déduire très précisément l'horaire (ou temps) en cours de l'horloge maître HM si les délais (ou temps) de propagation sur les liens du réseau sont connus.

On notera que cette deuxième étape principale (ii) peut être mise en oeuvre au moyen de deuxièmes dispositifs (de synchronisation) D2 qui sont associés respectivement aux horloges esclave HE et maître HM (et au minimum à la seule horloge esclave HE).

On entend ici par "associé" aussi bien le fait de faire partie intégrante d'une horloge esclave HE ou maître HM (comme illustré), que le fait d'être couplé directement ou indirectement à une horloge esclave HE ou maître HM. Par conséquent, un deuxième dispositif (de synchronisation) D2 peut être réalisé sous la forme de modules logiciels (ou informatiques), ou bien de circuits électroniques, ou encore d'une combinaison de circuits électroniques et de modules logiciels.

On notera également qu'il est avantageux que le procédé comprenne une troisième étape principale (iii) consistant tout d'abord à déterminer, de façon centralisée dans un équipement de gestion EG relié aux équipements intermédiaires Ei, horloge maître HM et horloge esclave HE, pour chaque équipement intermédiaire Ei et pour chaque flux choisi Fj (et au moins le premier F1), un nombre affiné K'ij (optimal) de paquets successifs du premier groupe, un nombre affiné N'ij (optimal) de paquets du second groupe et un temps de transit maximum affiné de paquets. Cette détermination se fait en analysant une corrélation des temps de transit instantanés entre paquets des premier G1 et second G2 groupes du flux choisi au niveau de l'équipement intermédiaire considéré Ei.

La troisième étape principale (iii) se poursuit alors par la transmission aux différents équipements intermédiaires Ei, des nombres affinés K'ij et N'ij et de chaque temps de transit maximum affiné de paquets Tij'_{ref}, déterminés pour eux en vue de leur utilisation par les premiers dispositifs D1 associés.

Il est rappelé que les corrélations de temps de transit instantanés sont de préférence déterminées au niveau de chacun des équipements intermédiaires Ei par leurs premiers dispositifs D1 associés. Mais, dans une variante, elles pourraient être déterminées au niveau de l'équipement de gestion EG à partir d'informations transmises par les premiers dispositifs D1 via les équipements intermédiaires Ei associés.

On notera que pendant la troisième étape principale (iii) il est avantageux de déterminer, d'une première part, une première fréquence d'émission FR1 d'un premier type de message de synchronisation (par exemple de type SYNC) dans le premier flux choisi F1 (allant de l'horloge maître HM vers l'horloge esclave HE), d'une deuxième part, une seconde fréquence d'émission FR2 d'un second type de message de synchronisation (par exemple de type DELAY_REQ) dans le second flux choisi F2 (allant de l'horloge esclave HE vers l'horloge maître HM), et, d'une troisième part, pour chaque équipement intermédiaire Ei, un nombre affiné K'ij de paquets successifs du premier groupe G1, un nombre affiné N'ij de paquets du second groupe et un temps de transit maximum affiné de paquets Tij'_{ref}, en fonction des corrélations de temps de transit instantanés entre paquets des premier G1 et second G2 groupes, déterminés pour chacun des équipements intermédiaires Ei et pour chacun des premier F1 et second F2 flux.

La première fréquence d'émission FR1 est destinée à être utilisée par l'horloge maître HM pour transmettre ses messages de synchronisation du premier type (par exemple de type SYNC). Elle lui est donc transmise par l'équipement de gestion EG, via le réseau. On notera que cette utilisation peut être éventuellement soumise à l'approbation préalable de l'horloge maître HM (par exemple en cas de surcharge du serveur IEEE 1588V2 desservant habituellement plusieurs centaines d'horloges esclaves). A titre d'exemple, dans un réseau de l'art antérieur, la première fréquence d'émission FR1 des messages de synchronisation de type SYNC est généralement comprise entre 16 et 64 messages par seconde.

La seconde fréquence d'émission FR2 est destinée à être utilisée par l'horloge esclave HE pour transmettre ses messages de synchronisation du second type (par exemple de type DELAY_REQ). Elle lui est donc transmise par l'équipement de gestion EG, via le réseau. On notera que cette utilisation peut être éventuellement soumise à l'approbation préalable de l'horloge esclave HE.

Les nombres affinés K'ij et N'ij déterminés pour un équipement intermédiaire Ei pour un premier F1 ou second F2 flux choisi sont destinés à être utilisés au niveau de cet équipement intermédiaire Ei en remplacement des nombres Kij et Nij correspondants, déterminés pour lui (par son premier dispositif D1) pendant la première étape principale (i).

De même, chaque temps de transit maximum affiné de paquets Tij'_{ref} déterminé pour un équipement intermédiaire Ei pour un premier F1 ou second F2 flux choisi est destiné à être utilisé au niveau de cet équipement intermédiaire Ei en remplacement du temps de transit maximum de paquets Tij_{ref} correspondant, déterminé pour lui (par son premier dispositif D1) pendant la première étape principale (i).

On notera que les nombres affinés K'ij et N'ij et les temps de transit maximum affinés de paquets Tij'_{ref} sont avantageusement déterminés en fonction, également, de la première fréquence d'émission FR1 et/ou de la seconde fréquence d'émission FR2. Dans ce cas, elles ne sont transmises aux équipements intermédiaires Ei qu'à condition que l'horloge maître HM et éventuellement l'horloge esclave HE ai(en)t donné(s) leur approbation quant à l'utilisation de cette première fréquence d'émission FR1 et éventuellement de cette seconde fréquence d'émission FR2.

On notera également que pendant la troisième étape principale (iii) on peut aussi calculer pour chacun des premier F1 et second F2 flux choisis le temps de transit cumulé correspondant pour l'ensemble des équipements intermédiaires Ei (en effectuant la somme de leurs temps de transit maximum de paquets Tij_{ref} respectifs), puis transmettre à l'horloge maître HM et/ou à l'horloge esclave HE ces deux temps de transit cumulés afin qu'elle(s) puisse(nt) corriger l'asymétrie des délais de transmission des paquets de synchronisation, induites par les éléments de réseau, des premier F1 et second F2 flux. Cela est plus particulièrement utile dans le contexte d'une synchronisation temporelle (ou "time delivery") et non pas d'une simple syntonisation (synchronisation fréquentielle).

On notera également que cette troisième étape principale (iii) peut être mise en oeuvre au moyen d'un troisième dispositif (de synchronisation) D3 qui est associé à l'équipement de gestion EG.

On entend ici par "associé" aussi bien le fait de faire partie intégrante de l'équipement de gestion EG (comme illustré), que le fait d'être couplé directement ou indirectement à l'équipement de gestion EG. Par conséquent, un troisième dispositif (de synchronisation) D3 peut être réalisé sous la forme de modules logiciels (ou informatiques), ou bien de circuits électroniques, ou encore d'une combinaison de circuits électroniques et de modules logiciels.

On notera également que les premiers D1, deuxièmes D2 et troisième D3 dispositifs de synchronisation peuvent constituer ensemble un système de synchronisation S destiné à être réparti "dans" des équipements intermédiaires Ei, au moins une horloge maître HM, au moins une horloge esclave HE et au moins un équipement de gestion EG.

L'invention ne se limite pas aux modes de réalisation de procédé de synchronisation, de premiers, deuxièmes et troisième dispositifs de synchronisation, et de système de synchronisation décrits ci-avant, seulement à titre d'exemple, mais elle englobe toutes les variantes que pourra envisager l'homme de l'art dans le cadre des revendications ci-après.

## Revendications

1. Procédé de synchronisation d'horloges maître (HM) et esclave (HE) d'un réseau à commutation de paquets, propres à s'échanger des flux de paquets de synchronisation via des équipements intermédiaires (Ei) dudit réseau, reliés entre eux, ledit procédé comprenant les étapes suivantes:
i) déterminer dans chaque équipement intermédiaire (Ei) des temps de transit instantanés de paquets appartenant à un premier groupe de paquets d'au moins un flux choisi de paquets de synchronisation, puis agir sur des paquets d'un second groupe de paquets dudit flux choisi de sorte que leur temps de transit instantanés dans chaque équipement intermédiaire (Ei) soit sensiblement égal à un temps de transit maximum correspondant, et
ii) filtrer les paquets dudit flux choisi au moins dans ladite horloge esclave (HE) afin de la synchroniser sur ladite horloge maître (HM) au moyen des paquets traités dudit second groupe de ce flux choisi.

2. Procédé selon la revendication 1, dans lequel on détermine à l'étape (i), dans chaque équipement intermédiaire (Ei), ledit temps de transit maximum des paquets du second groupe du flux choisi à partir des temps de transit instantanés des paquets du premier groupe dudit flux choisi.

3. Procédé selon la revendication 2, dans lequel on détermine à l'étape (i) dans chaque équipement intermédiaire (Ei) un nombre Kij de paquets successifs dudit premier groupe du flux choisi, devant être utilisés pour déterminer un temps de transit instantané représentatif des temps de transit instantanés des paquets dudit second groupe, et un nombre Nij de paquets dudit second groupe du flux choisi, devant être traités pour présenter ledit délai de transit maximum correspondant, en fonction d'une corrélation de temps de transit instantanés entre paquets desdits premier et second groupes dudit flux choisi.

4. Procédé selon l'une des revendications 1 à 3, dans lequel on prévoit une étape (iii) consistant à déterminer, pour chaque équipement intermédiaire (Ei) et pour chaque flux choisi, un nombre affiné K'ij de paquets successifs dudit premier groupe et un nombre affiné N'ij de paquets dudit second groupe et un temps de transit maximum affiné de paquets, en analysant une corrélation des temps de transit instantanés entre paquets des premier et second groupes du flux choisi au niveau de l'équipement intermédiaire (Ei) considéré, puis à utiliser ces nombres affinés K'ij et N'ij et chaque temps de transit maximum affiné de paquets dans lesdits équipements intermédiaires (Ei).

5. Procédé selon la revendication 4, dans lequel on effectue dans ladite étape (i) chaque corrélation de temps de transit entre paquets de chaque flux choisi au niveau de chaque équipement intermédiaire (Ei).

6. Procédé selon l'une des revendications 4 et 5, dans lequel on détermine à l'étape (iii) une première fréquence d'émission d'un premier type de message de synchronisation dans un premier flux choisi allant de ladite horloge maître (HM) vers ladite horloge esclave (HE), une seconde fréquence d'émission d'un second type de message de synchronisation dans un second flux choisi allant ladite horloge esclave (HE) vers ladite horloge maître (HM), et, pour chaque équipement intermédiaire (Ei), un nombre affiné K'ij de paquets successifs dudit premier groupe, un nombre affiné N'ij de paquets dudit second groupe et un temps de transit maximum affiné de paquets, en fonction desdites corrélations de temps de transit instantanés entre paquets desdits premier et second groupes correspondants, pour chacun desdits équipements intermédiaires (Ei) et pour chacun desdits premier et second flux.

7. Procédé selon l'une des revendications 4 à 6, dans lequel on calcule dans ladite étape (iii), pour chacun desdits premier et second flux choisis, un temps de transit cumulé correspondant pour l'ensemble desdits équipements intermédiaires (Ei), en sommant leurs temps de transit maximum de paquets respectifs, afin de transmettre à ladite horloge maître (HM) et/ou à ladite horloge esclave (HE) ces deux temps de transit cumulés pour qu'elle(s) puisse(nt) corriger une asymétrie des délais de transmission des paquets de synchronisation desdits premier et second flux.

8. Procédé selon l'une des revendications 1 à 7, dans lequel on filtre dans l'étape (ii) les paquets du flux choisi dans ladite horloge maître (HM) afin de synchroniser ladite horloge esclave (HE) sur ladite horloge maître (HM) au moyen des paquets traités du second groupe de ce flux choisi.

9. Procédé selon l'une des revendications 1 à 8, dans lequel on détermine à l'étape (ii) dans l'une au moins desdites horloges maître (HM) et esclave (HE) les paquets de synchronisation présentant une variation de délai de transmission comprise dans un intervalle choisi.

10. Dispositif (D1) pour la synchronisation d'horloges maître (HM) et esclave (HE) d'un réseau à commutation de paquets, propres à s'échanger des flux de paquets de synchronisation via des équipements intermédiaires (Ei) dudit réseau, reliés entre eux, ledit dispositif (D1) étant agencé pour déterminer dans l'un desdits équipements intermédiaires (Ei) des temps de transit instantanés de paquets appartenant à un premier groupe de paquets d'au moins un flux choisi de paquets de synchronisation, puis pour agir sur des paquets d'un second groupe de paquets dudit flux choisi de sorte que leur temps de transit instantané dans ledit équipement intermédiaire (Ei) soit sensiblement égal à un temps de transit maximum correspondant.

11. Dispositif selon la revendication 10, agencé pour déterminer dans son équipement intermédiaire (Ei) ledit temps de transit maximum des paquets du second groupe du flux choisi à partir des temps de transit instantanés des paquets du premier groupe du flux choisi.

12. Dispositif selon la revendication 11, agencé pour déterminer pour son équipement intermédiaire (Ei) un nombre Kij de paquets successifs dudit premier groupe du flux choisi, devant être utilisés pour déterminer un temps de transit instantané représentatif des temps de transit instantanés des paquets dudit second groupe dudit flux choisi, et un nombre Nij de paquets dudit second groupe du flux choisi, devant être traités, en fonction d'une corrélation de temps de transit instantanés entre paquets desdits premier et second groupes dudit flux choisi.

13. Dispositif selon la revendication 12, agencé pour déterminer chaque corrélation de temps de transit instantané entre paquets de chaque flux choisi pour son équipement intermédiaire (Ei).

14. Dispositif (D2) pour la synchronisation d'une horloge esclave (HE) d'un réseau à commutation de paquets sur une horloge maître (HM) dudit réseau à commutation de paquets, lesdites horloges maître (HM) et esclave (HE) étant propres à s'échanger des flux de paquets de synchronisation via des équipements intermédiaires (Ei) dudit réseau, reliés entre eux, ledit dispositif (D2) étant agencé pour filtrer des paquets appartenant à un second groupe de paquets d'un flux choisi, reçus au moins par ladite horloge esclave (HE) et ayant été traités par chaque équipement intermédiaire (Ei) pour que leur temps de transit instantané dans chaque équipement de réseau intermédiaire (Ei) soit sensiblement égal à un temps de transit maximum, afin de permettre une synchronisation de ladite horloge esclave (HE) sur ladite horloge maître (HM) au moyen desdits paquets dudit second groupe.

15. Dispositif selon la revendication 14, agencé pour déterminer pour ladite horloge esclave (HE) les paquets de synchronisation présentant une variation de délai de transmission comprise dans un intervalle choisi.

16. Dispositif (D3) pour la synchronisation d'horloges maître (HM) et esclave (HE) d'un réseau à commutation de paquets, propres à s'échanger des flux de paquets de synchronisation via des équipements intermédiaires (Ei) dudit réseau à commutation de paquets, reliés entre eux, ledit dispositif (D3) étant agencé pour déterminer, pour chaque équipement intermédiaire et pour chaque flux choisi, un nombre affiné K'ij de paquets successifs dudit premier groupe, un nombre affiné N'ij de paquets dudit second groupe et un temps de transit maximum affiné de paquets, en analysant une corrélation des temps de transit instantanés entre paquets desdits premier et second groupes du flux choisi au niveau de l'équipement intermédiaire considéré, afin que ces nombres affinés K'ij et N'ij et chaque temps de transit maximum affiné de paquets soient utilisés dans lesdits équipements intermédiaires (Ei) correspondants.

17. Dispositif selon la revendication 16, agencé pour déterminer une première fréquence d'émission d'un premier type de message de synchronisation dans un premier flux choisi allant de ladite horloge maître (HM) vers ladite horloge esclave (HE), une seconde fréquence d'émission d'un second type de message de synchronisation dans un second flux choisi allant ladite horloge esclave (HE) vers ladite horloge maître (HM), et, pour chaque équipement intermédiaire (Ei), un nombre affiné K'ij de paquets successifs dudit premier groupe, un nombre affiné N'ij de paquets dudit second groupe et un temps de transit maximum affiné de paquets, en fonction desdites corrélations de temps de transit instantanés entre paquets desdits premier et second groupes correspondants, pour chacun desdits équipements intermédiaires (Ei) et pour chacun desdits premier et second flux.

18. Système (S) de synchronisation d'horloges maître (HM) et esclave (HE) d'un réseau à commutation de paquets, propres à s'échanger des flux de paquets de synchronisation via des équipements intermédiaires (Ei) dudit réseau, reliés entre eux, ledit système (S) comprenant des premiers dispositifs (D1) selon l'une des revendications 10 à 13, propres à être associés respectivement auxdits équipements intermédiaires (Ei), des deuxièmes dispositifs (D2) selon l'une des revendications 14 et 15, propres à être associés respectivement auxdites horloges maître (HM) et esclave (HE), et un troisième dispositif (D3) selon l'une des revendications 16 et 17, propre à être couplé auxdits équipements intermédiaires (Ei), à ladite horloge maître (HM) et à ladite horloge esclave (HE).

## Revendications modifiées

### Revendications modifiées conformément à la règle 137(2) CBE.

**1.** Procédé de synchronisation d'horloges maître (HM) et esclave (HE) d'un réseau à commutation de paquets, propres à s'échanger des flux de paquets de synchronisation via des équipements intermédiaires (Ei) dudit réseau, reliés entre eux, ledit procédé comprenant les étapes suivantes:
i) déterminer dans chaque équipement intermédiaire (Ei) des temps de transit instantanés de paquets appartenant à un premier groupe de paquets d'au moins un flux choisi de paquets de synchronisation, déterminer un temps de transit maximum des paquets à partir desdits temps de transit instantanés, puis agir sur des paquets d'un second groupe de paquets dudit flux choisi de sorte que leur temps de transit instantanés dans chaque équipement intermédiaire (Ei) soit sensiblement égal audit temps de transit maximum correspondant, et
ii) filtrer les paquets dudit flux choisi au moins dans ladite horloge esclave (HE) afin de la synchroniser sur ladite horloge maître (HM) au moyen des paquets traités dudit second groupe de ce flux choisi.

**2.** Procédé selon la revendication précédente, dans lequel on détermine à l'étape (i) dans chaque équipement intermédiaire (Ei) un nombre Kij de paquets successifs dudit premier groupe du flux choisi, devant être utilisés pour déterminer un temps de transit instantané représentatif des temps de transit instantanés des paquets dudit second groupe, et un nombre Nij de paquets dudit second groupe du flux choisi, devant être traités pour présenter ledit délai de transit maximum correspondant, en fonction d'une corrélation de temps de transit instantanés entre paquets desdits premier et second groupes dudit flux choisi.

**3.** Procédé selon l'une des revendications précédentes, dans lequel on prévoit une étape (iii) consistant à déterminer, pour chaque équipement intermédiaire (Ei) et pour chaque flux choisi, un nombre affiné K'ij de paquets successifs dudit premier groupe et un nombre affiné N'ij de paquets dudit second groupe et un temps de transit maximum affiné de paquets, en analysant une corrélation des temps de transit instantanés entre paquets des premier et second groupes du flux choisi au niveau de j'équipement intermédiaire (Ei) considéré, puis à utiliser ces nombres affinées K'ij et N'ij et chaque temps de transit maximum affiné de paquets dans lesdits équipements intermédiaires (Ei).

**4.** Procédé selon la revendication 3, dans lequel on effectue dans ladite étape (i) chaque corrélation de temps de transit entre paquets de chaque flux choisi au: niveau de chaque équipement intermédiaire (Ei).

**5.** Procédé selon l'une des revendications 3 et 4, dans lequel on détermine à l'étape (iii) une première fréquence d'émission d'un premier type de message de synchronisation dans un premier flux choisi allant de ladite horloge maître (HM) vers ladite horloge esclave (HE), une seconde fréquence d'émission d'un second type de message de synchronisation dans un second flux choisi allant ladite horloge esclave (HE) vers ladite horloge maître (HM), et, pour chaque équipement intermédiaire (Ei), un nombre affiné K'ij de paquets successifs dudit premier groupe, un nombre affiné N'ij de paquets dudit second groupe et un temps de transit maximum affiné de paquets, en fonction desdites corrélations de temps de transit instantanés entre paquets desdits premier et second groupes correspondants, pour chacun desdits équipements intermédiaires (Ei) et pour chacun desdits premier et second flux.

**6.** Procédé selon l'une des revendications 3 à 5, dans lequel on calcule dans ladite étape (iii), pour chacun desdits premier et second flux choisis, un temps de transit cumulé correspondant pour l'ensemble desdits équipements intermédiaires (Ei), en sommant leurs temps de transit maximum de paquets respectifs, afin de transmettre à ladite horloge maître (HM) et/ou à ladite horloge esclave (HE) ces deux temps de transit cumulés pour qu'elle(s) puisse(nt) corriger une asymétrie des délais de transmission des paquets de synchronisation desdits premier et second flux.

**7.** Procédé selon l'une des revendications 1 à 6, dans lequel on filtre dans l'étape (ii) les paquets du flux choisi dans ladite horloge maître (HM) afin de synchroniser ladite horloge esclave (HE) sur ladite horloge maître (HM) au moyen des paquets traités du second groupe de ce flux choisi.

**8.** Procédé selon l'une des revendications 1 à 7, dans lequel on détermine à l'étape (ii) dans l'une au moins desdites horloges maître (HM) et esclave (HE) les paquets de synchronisation présentant une variation de délai de transmission comprise dans un intervalle choisi.

**9.** Dispositif (D1) pour la synchronisation d'horloges maître (HM) et esclave (HE) d'un réseau à commutation de paquets, propres à s'échanger des flux de paquets de synchronisation via des équipements intermédiaires (Ei) dudit réseau, reliés entre eux, ledit dispositif (D1) étant agencé pour déterminer dans l'un desdits équipements intermédiaires (Ei) des temps de transit instantanés de paquets appartenant à un premier groupe de paquets d'au moins un flux choisi de paquets de synchronisation, pour déterminer un temps de transit maximum à partir desdits temps de transit instantanés, puis pour agir sur des paquets d'un second groupe de paquets dudit flux choisi de sorte que leur temps de transit instantané dans ledit équipement intermédiaire (Ei) soit sensiblement égal audit temps de transit maximum correspondant.

**10.** Dispositif selon la revendication 9, agencé pour déterminer pour son équipement intermédiaire (Ei) un nombre Kij de paquets successifs dudit premier groupe du flux choisi, devant être utilisés pour déterminer un temps de transit instantané représentatif des temps de transit instantanés des paquets dudit second groupe dudit flux choisi, et un nombre Nij de paquets dudit second groupe du flux choisi, devant être traités, en fonction d'une corrélation de temps de transit, instantanés entre paquets desdits premier et second groupes dudit flux choisi.

**11.** Dispositif selon la revendication 10, agencé pour déterminer chaque corrélation de temps de transit instantané entre paquets de chaque flux choisi pour son équipement intermédiaire (Ei).

**12.** Dispositif (D2) pour la synchronisation d'une horloge esclave (HE) d'un réseau à commutation de paquets sur une horloge maître (HM) dudit réseau à commutation de paquets, lesdites horloges maître (HM) et esclave (HE) étant propres à s'échanger des flux de paquets de synchronisation via des équipements intermédiaires (Ei) dudit réseau, reliés entre eux, ledit dispositif (D2) étant agencé pour filtrer des paquets appartenant à un second groupe de paquets d'un flux choisi, reçus au moins par ladite horloge esclave (HE) et ayant été traités par chaque équipement intermédiaire (Ei) pour que leur temps de transit instantané dans chaque équipement de réseau intermédiaire (Ei) soit sensiblement égal à un temps de transit maximum, afin de permettre une synchronisation de ladite horloge esclave (HE) sur ladite horloge maître (HM) au moyen desdits paquets dudit second groupe.

**13.** Dispositif selon la revendication 12, agencé pour déterminer pour ladite horloge esclave (HE) les paquets de synchronisation présentant une variation de délai de transmission comprise dans un intervalle choisi.

**14.** Dispositif (D3) pour la synchronisation d'horloges maître (HM) et esclave (HE) d'un réseau à commutation de paquets, propres à s'échanger des flux de paquets de synchronisation via des équipements intermédiaires (Ei) dudit réseau à commutation de paquets, reliés entre eux, ledit dispositif (D3) étant agencé pour déterminer, pour chaque équipement intermédiaire et pour chaque flux choisi, un nombre affiné K'ij de paquets successifs dudit premier groupe, un nombre affiné N'ij de paquets dudit second groupe et un temps de transit maximum affiné de paquets, en analysant une corrélation des temps de transit instantanés entre paquets desdits premier et second groupes du flux choisi au niveau de l'équipement intermédiaire considéré, afin que ces nombres affinés K'ij et N'ij et chaque temps de transit maximum affiné de paquets soient utilisés dans lesdits équipements intermédiaires (Ei) correspondants.

**15.** Dispositif selon la revendication 14, agencé pour déterminer une première fréquence d'émission d'un premier type de message de synchronisation dans un premier flux choisi allant de ladite horloge maître (HM) vers ladite horloge esclave (HE), une seconde fréquence d'émission d'un second type de message de synchronisation dans un second flux choisi allant ladite horloge esclave (HE) vers ladite horloge maître (HM), et, pour chaque équipement intermédiaire (Ei), un nombre affiné K'ij de paquets successifs dudit premier groupe, un nombre affiné N'ij de paquets dudit second groupe et un temps de transit maximum affiné de paquets, en fonction desdites corrélations de temps de transit instantanés entre paquets desdits premier et second groupes correspondants, pour chacun desdits équipements intermédiaires (Ei) et pour chacun desdits premier et second flux,

**16.** Système (S) de synchronisation d'horloges maître (HM) et esclave (HE) d'un réseau à commutation de paquets, propres à s'échanger des flux de paquets de synchronisation via des équipements intermédiaires (Ei) dudit réseau, reliés entre eux, ledit système (S) comprenant des premiers dispositifs (D1) selon l'une des revendications 9 à 11, propres à être associés respectivement auxdits équipements intermédiaires (Ei), des deuxièmes dispositifs (D2) selon l'une des revendications 12 et 13, propres à être associés respectivement auxdites horloges maître (HM) et esclave (HE), et un troisième dispositif (D3) selon l'une des revendications 14 et 15, propre à être couplé auxdits équipements intermédiaires (Ei), à ladite horloge maître (HM) et à ladite horloge esclave (HE),
